# FASCICULE DE BREVET EUROPEEN

(11) **EP 1 130 503 B1**
(45) Date de publication et mention de la délivrance du brevet: **07.05.2003**
(21) Numéro de dépôt: 01400120.0
(22) Date de dépôt: 16.01.2001
(51) Int. Cl.: G06F 3/023, G06F 17/30

(54) **Procédé d'appariement d'un motif saisi et d'une phrase enregistrée dans un dictionnaire**
Verknüpfungsverfahren zwischen einem eingegebenen Muster und einem in einem Wörterbuch enthaltenen Satz
Process for matching an inputed pattern with a sentence stored in a dictionary

(30) Priorité: 02.03.2000 FR 0002716
(43) Date de publication de la demande: 05.09.2001
(73) Titulaire: SAGEM S.A., 75015 Paris (FR)
(72) Inventeur: Cuoq, Jean Noel, 92150 Suresnes (FR)
(74) Mandataire: Schmit, Christian Norbert Marie

(56) Documents cités:
- GB-A- 2 308 473
- GB-A- 2 335 059
- US-A- 5 228 133
- US-A- 6 012 057
- PATENT ABSTRACTS OF JAPAN vol. 010, no. 180 (P-471), 24 juin 1986 (1986-06-24) & JP 61 028156 A (CANON INC), 7 février 1986 (1986-02-07)

## Description

La présente invention a pour objet un procédé d'appariement d'un motif saisi et d'une phrase enregistrée dans un dictionnaire. Le domaine de l'invention inclut tous les appareils ayant un clavier comportant un nombre de touches inférieur au nombre de caractères qu'il est possible de saisir avec ce clavier. En particulier le domaine de l'invention comporte les télécommandes et les téléphones mobiles. En effet ces deux derniers appareils comportent dix touches numériques avec lesquelles il est également possible de saisir tous les caractères de l'alphabet, soit 26, plus certains caractères spéciaux comme des signes de ponctuation. Le but de l'invention est de rendre l'usage de ces appareils plus simple.

Dans l'état de la technique on connaît les télécommandes ayant un clavier comportant dix touches numériques, de 0 à 9. Chacune de ces dix touches correspond d'autre part à un certain nombre de caractères alphabétiques ou de signes de ponctuation. Dans la pratique, chaque touche, en plus de sa signification numérique, correspond à au moins trois caractères. Ces caractères ont un certain ordre sur la touche. Lorsque l'on souhaite accéder à l'un des caractères de cette touche, hors le caractère numérique, il faut d'une part placer le clavier dans le mode de saisie alphabétique, puis appuyer le nombre de fois nécessaire sur la touche pour faire afficher le caractère souhaité. Il est aussi possible de maintenir un appui sur cette touche, ce qui a pour effet de faire défiler tous les caractères correspondant à cette touche. On relâche alors la touche au moment où le caractère que l'on souhaite afficher apparaît. Ce système devient relativement contraignant lorsqu'il s'agit de saisir les adresses Internet par exemple. En effet une adresse Internet est composée en moyenne d'une trentaine de caractères. Sachant qu'il faut en moyenne appuyer deux fois par touche pour saisir un caractère, pour saisir une adresse il faut en moyenne appuyer soixante fois sur le clavier. Cela représente donc au moins le double du temps nécessaire pour la saisie d'une adresse complète.

On connaît d'autre part des systèmes dits de complétion. Ces systèmes trouvent leur utilité lorsque l'appareil comporte déjà une liste de sites qu'est susceptible de visiter l'utilisateur. Cette liste comporte alors aussi l'adresse de ces sites. Le principe de la complétion est qu'au fur et à mesure que l'utilisateur saisit une adresse, un algorithme effectue une recherche dans la liste des sites. De plus algorithme propose alors à l'utilisateur la possibilité de passer au site suivant dans la liste correspondant à la partie de l'adresse qu'il a déjà tapée. L'algorithme de complétion effectue donc une recherche dans la liste totale des sites à partir du motif saisi par l'utilisateur et du début des adresses des sites compris dans la liste. Le problème de cette solution est qu'il faut toujours appuyer en moyenne plusieurs fois sur une touche pour accéder à une lettre. Il y a toujours une perte de temps lors de la saisie. De plus en cas d'erreur lors de la saisie, la correction ne peut se faire, en moyenne, qu'après avoir appuyer trois fois sur le clavier.

Enfin on connaît aussi un algorithme qui permet d'effectuer une recherche sur des débuts d'adresses dans une liste de sites, tout en permettant de n'appuyer qu'une seule fois sur une touche pour accéder à un caractère. C'est-à-dire, si une touche représente trois caractères, et que l'on souhaite accéder à l'un quelconque de ces trois caractères il suffit d'appuyer une fois sur cette touche. L'algorithme prendra en compte le fait que cet appui peut correspondre à trois caractères et effectuera la recherche en conséquence. Cependant dans cette solution la recherche s'effectue sur le début des adresses. Ce qui entraîne la mise en oeuvre d'algorithme de recherche spécifique' sur les débuts de chaîne. Dans le cas d'adresses Intemet, elles sont nombreuses celles qui commencent par les trois lettres www. Le problème de cette solution est donc qu'elle oblige l'utilisateur à taper un grand nombre de fois sur le clavier afin de fournir à l'algorithme de recherche un motif qui lui permette de suffisamment discriminer parmi toutes les adresses de la liste. Si l'utilisateur ne tape pas suffisamment de caractères il va se retrouver dans l'obligation de parcourir une liste importante de propositions pour l'adresse qu'il recherche. Cela constitue donc une perte de temps, puisque le temps qu'il n'aura pas passé à saisir l'adresse il le passera à faire défiler toutes les solutions possibles que lui propose l'algorithme de recherche.

Dans l'état de la technique on connaît les documents US-A-6 012 057, US-A-5 228 133, JP 61 022 156 A et GB-A-2 335 059.

L'invention résout ces problèmes en permettant à l'utilisateur de ne saisir qu'une séquence de l'adresse qu'il recherche. Cette séquence comporte des caractères. Chaque caractère est saisi par un appui simple sur une touche. On obtient ainsi un motif qui va être apparié avec des phrases comprises dans un dictionnaire enregistré dans une mémoire. La recherche s'effectue alors aussi au-delà du premier caractère d'une phrase. Dans la solution on propose à l'utilisateur une liste de choix correspondant à toutes les adresses qui comportent le motif qu'il a saisi. Pour effectuer la recherche plus rapidement on stocke, en plus des adresses sous leur forme naturelle, les adresses converties à un format tel qu'elle serait saisie avec le mode de saisie du motif. C'est à dire, on stocke pour chaque caractère de l'adresse la touche à laquelle ce caractère correspond. Cela permet d'effectuer la recherche plus rapidement. La recherche est effectuée soit au fur et à mesure de la saisie du motif soit déclenchée par l'appui sur une touche une fois que le motif a été saisi. L'utilisateur peut faire défiler les différentes solutions correspondant au motif qu'il a saisi à l'aide d'une touche, puis valider l'une de ces solutions à l'aide d'une autre touche.

L'invention a donc pour objet un procédé d'appariement d'un motif saisi et d'une phrase enregistrée dans un dictionnaire comportant plusieurs phrases dans lequel:
- on saisit le motif à partir d'un clavier comportant un nombre réduit de touches alphabétiques, ce nombre étant inférieur au nombre de caractères que l'on peut employer dans une phrase du dictionnaire, chaque touche correspondant à plusieurs caractères,
- on appuie une seule fois, de manière ponctuelle, sur une touche pour accéder à un caractère de cette touche correspondant à cette touche,
- on recherche les phrases du dictionnaire qui comportent une occurrence du motif saisi.
- on enregistre les résultats de la recherche dans une mémoire,
caractérisé en ce que
- on recherche une occurrence du motif au-delà d'un premier caractère d'une phrase.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : une illustration de moyens utiles pour la mise en oeuvre du procédé selon l'invention ;
- Figure 2 : une illustration d'étape du procédé selon l'invention.

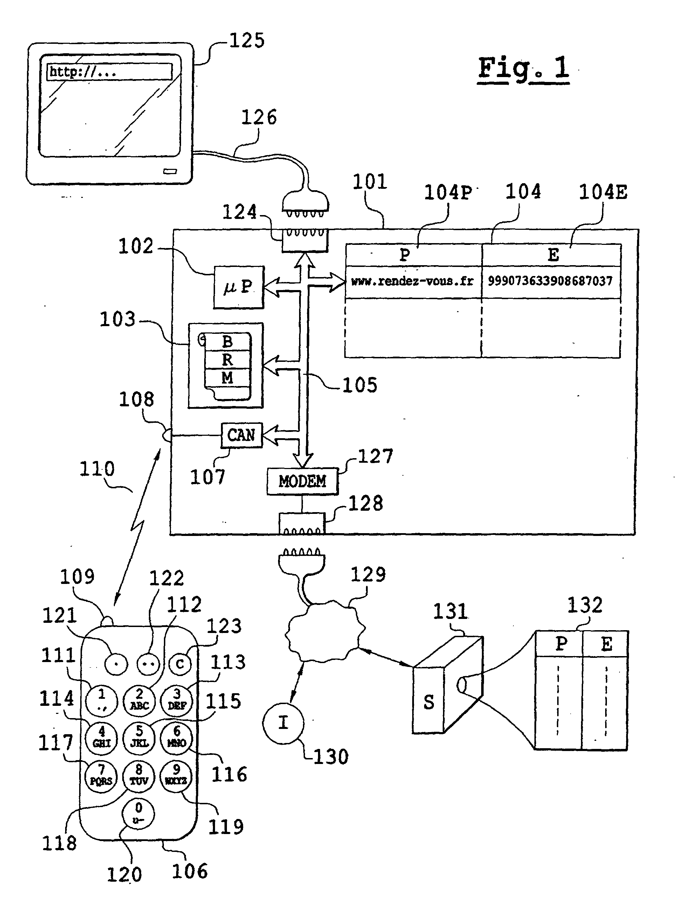

La figure 1 montre un appareil 101, dans un exemple préféré, cet appareil est un décodeur doté de possibilité de navigation sur Internet. Internet est un réseau informatique. Ce réseau comporte différents sites, chaque site comportant à son tour un ou plusieurs serveurs. Chaque site est reconnu sur le réseau grâce à son adresse, ou URL (Universal Resource Locator pour Localisateur Universel de Ressource). Le fait de naviguer consiste à se connecter à l'une de ces adresses et à rapatrier des informations contenues sur un des serveurs du site. Le rapatriement s'effectue vers un ordinateur dit local alors que le serveur est distant. L'ordinateur local formate les données qu'il a rapatriées afin qu'elles puissent être affichées sur un écran de façon conviviale. Dans la majorité des cas ces données sont transmises sous la forme de fichiers au format HTML (Hypertext Markee Language).

L'appareil 101 comporte un microprocesseur 102, une mémoire 103 de travail et une mémoire 104 de stockage d'un dictionnaire d'adresses Internet. Les éléments 102 à 104 sont connectés à un bus 105. Le bus 105 comporte tous les fils, ou pistes, nécessaires à la circulation de signaux d'adresses, de données, de commandes et d'interruptions. La mémoire 104 est structurée en un tableau comportant au moins deux colonnes. Une première colonne 104p contient des adresses, ou URL, de sites du réseau Internet. Une deuxième colonne 104e de la mémoire 104 comporte la traduction des adresses de la colonne 104p. Cette traduction correspond aux adresses de la colonne 104p si elles avaient été saisies grâce à une télécommande 106 ne comportant que dix touches pour la saisie de caractères alphabétiques et de ponctuation. Cette saisie est alors effectuée en appuyant qu'une seule fois sur une touche lorsqu'on souhaite accéder à un caractère supporté par cette touche. Dans notre exemple, la chaîne de caractère stockée dans la colonne 104p est:
www.rendez-vous.fr
est alors traduite dans la colonne 104e par la séquence de touches : 999173633908687137.

La mémoire 103 comporte plusieurs zones. Une première zone 103b comporte des codes-instructions qui permettent la navigation sur Internet. L'ensemble de ces codes-instruction est un navigateur. Ces codes-instruction sont lus puis exécutés par le microprocesseur 102. D'autre part la mémoire 103 contient une zone 103r correspondant à des codes-instruction permettant d'effectuer une recherche à travers la mémoire 104 à partir d'un motif saisi grâce à la télécommande 106. La mémoire 103 comporte aussi une zone 103m qui permet la mise à jour du dictionnaire suite à certaine actions effectuées par l'utilisateur de l'appareil 101. Enfin la mémoire 103 comporte une dernière zone qui contient des codes-instruction des autres programmes nécessaires à la réalisation des fonctionnalités de l'appareil 101, c'est-à-dire le décodage de programmes télévision par exemple. Cette dernière zone de la mémoire 103 comporte aussi une zone de travail dans laquelle sont stockées les données temporaires dont ont besoin les différents programme précités pour s'exécuter. Cette exécution est effectuée par le microprocesseur 102.

L'appareil 101 comporte un convertisseur analogique numérique 107 connecté d'une part au bus 105, d'autre part à un capteur infrarouge 108. Le capteur infrarouge 108 reçoit des signaux émis par la télécommande 106. La télécommande 106 émet ces signaux via un capteur 109 infrarouge. Il existe donc une liaison 110 entre la télécommande 106 et l'appareil 101. Les signaux reçus par le capteur 108 sont transmis au convertisseur 107 analogique numérique qui les convertis en données numériques. Ces données numériques sont lues par le microprocesseur 102 par l'intermédiaire du bus 105. Dans la pratique la liaison 110 se fait grâce à des signaux infrarouges, mais il est tout à fait envisageable qu'elle se fasse grâce à des signaux radio. La télécommande 106 comporte au moins 13 touches. Les touches 111 à 120 correspondent aux caractères numériques 1 à 0 respectivement. D'autre part la touche 111 correspond aussi aux caractères . et /, la touche 102 aux caractères ABC, la touche 103 aux caractères DEF, 104 au caractères GHI, 105 aux caractères JKL, 106 aux caractères MNO, 107 aux caractères PQRS, 108 aux caractères TUV, 109 aux caractères WXYZ, 120 aux caractères et -. Les touches 121 à 122 sont des touches de fonction. Les symboles utilisés pour les touches 121 à 123 sont purement arbitraires. De même l'affectation des caractères aux touches 111 à 120 est purement arbitraire, mais utile pour la description. L'invention peut être réalisée si l'affectation des caractères à ces touches est différent. De même le nombre de touches est arbitraire. Il pourrait y en avoir plus ou moins sans que le principe de l'invention soit changé.

L'appareil 101 comporte aussi un connecteur 124 connecté au bus 105. Le connecteur 124 permet d'effectuer la liaison entre l'appareil 101 et un écran 125. Cette liaison s'effectue, par exemple, par un câble 126. Dans notre exemple le connecteur 124 comporte les circuits nécessaires pour transformer les données numériques qu'il reçoit de la part du microprocesseur 102 en données analogiques que peut afficher l'écran 125. L'écran 125 peut aussi être un écran numérique capable d'assimiler directement les données numériques fournies par le microprocesseur 102. L'écran 125 sert par exemple à afficher les caractères saisis par l'intermédiaire de la télécommande 106.

L'appareil 101 contient aussi un modem 127. Le modem 127 est connecté d'une part au bus 105, d'autre part à un port 128. Le modem 127 peut être du type standard, c'est-à-dire analogique, ou un modem numérique. Le connecteur 128 assure la liaison entre l'appareil 101 et un réseau 129 de transmission des signaux. Le réseau 129 comporte des moyens de connexions filaires et, ou hertziennes. Il comporte aussi des moyens de routage de messages qui sont émis via ce réseau 129. Ce réseau 129 est d'autre part connecté au réseau 130 Internet et à un serveur 131. Dans un cas particulier le serveur 131 peut faire partie du réseau 103 Internet. Le serveur 131 comporte une mémoire structurée en table comportant une liste d'adresses Internet. Cette table 132 sert à la mise à jour de la table 104. Le serveur 131 comporte tous les moyens nécessaires pour la gestion de la table 132 ainsi que les moyens nécessaires à sa connexion au réseau 129. Ces moyens sont connus et non décrits. Parmi ces moyens on trouve cependant une mémoire dans laquelle sont enregistrés des codes-instruction qui permettent au serveur 131 d'établir une liaison avec l'appareil 101.

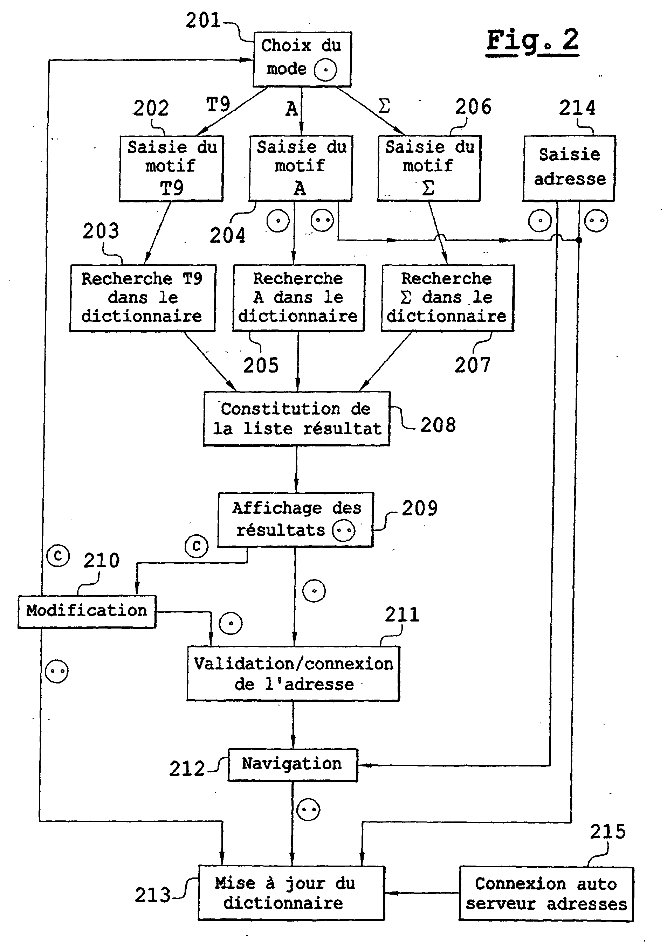

La Figure 2 montre une première étape 201 préliminaire de choix du mode de saisie. Le choix du mode s'effectue, dans notre exemple, par l'appui sur la touche 121. Le mode actif au moment de l'entrée dans l'étape 201 est le dernier mode qu'a utilisé l'utilisateur de l'appareil 101. Il y a 3 modes possibles, le mode T9, le mode alphabétique et le mode symbolique. Chaque pression sur la touche 121, lorsque l'on est dans l'étape 201, permet de passer d'un mode au suivant de manière cyclique.

Si l'utilisateur de l'appareil 101 choisit le mode de saisie T9 on passe à l'étape 202. L'étape 202 est une étape de saisie du motif en mode T9. Dans l'étape 202 l'utilisateur saisit un motif grâce aux touches 111 à 120. Si le motif qu'il saisit a une longueur de N caractères, il appuiera sur N touches. Au fur et à mesure qu'il saisit le motif l'algorithme T9 effectue une recherche dans un dictionnaire afin de trouver les adresses Internet dont le début est le motif entrain d'être saisi par l'utilisateur. Il s'agit de l'étape 203 de recherche T9 dans le dictionnaire.

Pour sortir de l'étape 201 l'utilisateur a pu choisir le mode alphabétique, on passe alors à l'étape 204. L'étape 204 est une étape de saisie du motif en mode alphabétique. Dans cette étape 204 l'utilisateur peut être amené à appuyer plusieurs fois sur une touche si la lettre qu'il souhaite insérer dans le motif n'est pas la première accessible par cette touche. Ainsi si l'utilisateur souhaite saisir le motif REN, avec le clavier 106 il doit appuyer trois fois sur la touche 117, deux fois sur la touche 113 et deux fois sur la touche 116. L'utilisateur appuie donc sur sept touches pour saisir trois caractères.

A partir de l'étape 204 l'utilisateur peut choisir soit de mettre à jour le dictionnaire à partir de l'adresse qu'il vient de saisir, cela se fait par un appui sur la touche 122, soit de déclencher une recherche parmi les adresses existantes déjà dans le dictionnaire. Cela se fait par un appui sur la touche 121. On passe alors à une étape 205 de recherche alphabétique dans le dictionnaire. On peut envisager d'autres solutions pour déclencher le passage de l'étape 204 à l'étape 205. Comme pour l'étape 202 on peut prévoir que le passage de l'étape 204 à l'étape 205 se fasse en permanence. C'est à dire que la recherche soit effectuée au fur et à mesure que l'utilisateur saisit les caractères. La recherche peut aussi être déclenchée à partir du moment où l'utilisateur a saisi un certain nombre de caractères, par exemple trois.

Dans l'étape 205 un programme dont les codes instruction sont contenus dans la mémoire 103R et exécutés par le microprocesseur 102 va parcourir la colonne 104p afin de rechercher les adresses qui contiennent le motif saisi à l'étape 204. Cette recherche s'effectue non seulement sur le début des adresses contenues dans la colonne 104p, mais aussi au-delà du premier caractère. Ainsi dans notre exemple si l'utilisateur a saisi REN, l'adresse www.rendez-vous.fr sera trouvée.

Depuis l'étape 201 si l'utilisateur a choisi le mode de saisie du motif symbolique on passe à une étape 206. Dans l'étape 206 l'utilisateur appuie sur une touche pour un symbole du motif qu'il souhaite saisir. Par exemple s'il souhaite saisir le motif REN il va appuyer une fois sur la touche 7, une fois sur la touche 3, et une fois sur la touche 6. Les symboles affichés sur l'écran 125 au cours de la saisie seront donc 7, 3, 6. Cette saisie s'effectue par l'intermédiaire de la télécommande 106. A chaque fois que l'utilisateur appuie sur une touche de la télécommande 106, celle-ci émet, via la diode infrarouge 109, un signal. Ce signal est alors capté par la diode réceptrice 108, puis numérisé par le convertisseur 107. Le convertisseur 107 émet alors une interruption via le bus 105 pour avertir le microprocesseur que l'utilisateur vient d'enfoncer une touche. Le microprocesseur 102 peut alors aller lire sur une sortie du convertisseur 107 quelle touche vient d'être enfoncée et déclencher l'affichage du symbole correspondant à cette touche sur l'écran 125. Ces opérations s'effectuent sous le contrôle de codes instructions contenus dans la mémoire 103. On passe de l'étape 206 à une étape 207 de recherche symbolique dans le dictionnaire.

Dans la pratique l'étape 207 peut s'effectuer en même temps que l'étape 206. Ou l'étape 207 peut être déclenchée à partir de l'étape 206 par l'appui sur une touche, ou l'étape 207 peut être déclenchée à partir de l'étape 206 automatiquement lorsque l'on a saisi un certain nombre de symboles, par exemple trois. Dans ce cas le nombre de symboles est alors paramétrable. Au fur et à mesure de sa saisie dans l'étape 206, le motif est enregistré dans une zone de la mémoire 103 par exemple. Le microprocesseur est donc capable de retrouver ce motif. Sous le contrôle de codes instructions contenus dans la mémoire 103R, le microprocesseur 102 tente d'appareiller le motif saisi dans l'étape 206 avec les phrases traduites contenues dans la colonne 104e. Il est plus rapide en effet d'effectuer la recherche dans la colonne 104e. En effet, chaque symbole saisi pour le motif correspond à 3 ou plus lettres. S'il fallait effectuer des recherches pour toutes les possibilités pour un motif contenant 3 symboles, en considérant que chaque symbole correspond à 3 caractères, il y aurait alors 27 motifs possibles pour explorer la colonne 104p. Cela constitue une perte de temps préjudiciable à l'ergonomie de l'emploi de l'appareil 101.

Les étapes 203, 205 et 207 débouchent sur une étape 208 de constitution de la liste résultat. Cette liste est stockée dans une zone résultat de la mémoire 103, et est constituée par des références à des lignes de la table 104. Chacune des lignes de la table 104 qui est référencée dans la zone résultat contient, dans la colonne 104e, le motif qui a été saisi dans l'une des étapes 202, 204 ou 206. Si on considère que la recherche s'effectue au fur et à mesure de la saisie du motif, une table de résultat temporaire est créée par le microprocesseur 102 dans une zone de la mémoire 103, à la saisie du premier caractère du motif. Lorsque l'utilisateur saisit un caractère suivant le microprocesseur 102 commence par effectuer une recherche dans la table temporaire pour voir si ces résultats sont toujours valables puis il passe à la table 104. La recherche dans la table 104 reprend alors là où elle était au moment de la saisie du caractère, ou symbole, suivant. A la sortie de l'étape 208 on obtient donc dans une zone de la mémoire 103 une liste de référence à des lignes de la table 104 contenant toutes le motif saisi. On passe alors à l'étape 209 d'affichage des résultats.

Dans l'étape 209 le microprocesseur, sous le contrôle de codes instructions contenus dans la mémoire 103, parcourt la table des références résultat de la recherche. Ce parcours se fait sous le contrôle de l'utilisateur. A la fin de la recherche il y a une référence résultat active. Cette référence pointe vers une ligne dans la table 104. L'adresse Internet, c'est à dire le contenu de la colonne 104p, qui est référencée est alors affichée sur l'écran 125. L'utilisateur passe à la référence, de la zone résultat, suivante par un appui sur la touche 122. Lorsque l'utilisateur arrive au dernier résultat de la recherche, s'il appuie une nouvelle fois sur la touche 122 il repasse au premier résultat de la recherche. Dans une variante de l'invention on peut envisager qu'il y ait 2 touches pour parcourir les résultats de la recherche, une dans chaque sens. Lorsque l'utilisateur a affiché l'adresse qui l'intéresse parmi celles résultant de la recherche il appuie alors soit sur la touche 121 soit sur la touche 123. Si l'utilisateur appuie sur la touche 123 on passe à une étape 210 de modification.

Dans l'étape 210 l'utilisateur a la possibilité de modifier la syntaxe de l'adresse résultant de la recherche. Cela peut être utile si l'utilisateur souhaite compléter une adresse générique. Par exemple il est à l'heure actuelle possible pour tous les abonnés à un fournisseur d'accès au réseau Internet de se construire une page Intemet. En général les adresses de ces pages commencent par un préfixe commun à toutes les pages. Il est donc envisageable d'enregistrer dans le dictionnaire ce préfixe et d'y accéder par une recherche en entrant comme motif une partie de ce préfixe. Une fois que le résultat de la recherche nous a permis d'accéder au préfixe, on peut alors compléter ce préfixe pour obtenir l'adresse désirée.

A partir de l'étape 210 si on appuie sur la touche 123 on revient à l'étape 201. On peut alors recommencer une nouvelle recherche avec un nouveau motif. Cela est utile dans le cas où le motif que l'on a initialement saisi nous renvoie trop de réponses. Ou si le motif que l'on a saisi ne nous renvoie pas la réponse souhaitée. On peut aussi quitter l'étape 210 par une pression sur la touche 122. Dans ce cas on passe à une étape de mise à jour du dictionnaire. Si à partir de l'étape 210 on appuie sur la touche 121 on passe à une étape 211 de validation ou de connexion à l'adresse. L'étape 211 est également accessible à partir de l'étape 209 si l'on appuie sur la touche 121.

Lors de l'affichage des résultats, les adresses Internet sont complétées par leur partie commune. A savoir par exemple http//:. En effet ce préfixe est commun à toutes les adresses Internet, il est donc inutile de le stocker dans la mémoire 104. Il est par contre nécessaire pour établir une connexion avec le réseau Internet. Lors de la validation d'une adresse, on rajoute donc ce préfixe. La validation de cette adresse se fait par un appui sur une touche. On passe alors à une étape 212 de navigation.

Dans l'étape 212 l'adresse validée est lue par le microprocesseur 102 qui, sous le contrôle de codes instructions contenus dans la zone mémoire 103B, transmet cette adresse au circuit 127 modem. Le modem va donc se connecter sur le réseau 129 et rechercher les informations contenues sur le site du réseau 130 ayant l'adresse validée. Une fois connecté l'utilisateur de l'appareil 101 va alors pouvoir naviguer sur Internet. Cette navigation se fait à l'aide de la télécommande 106. Au cours de cette navigation l'utilisateur de l'appareil 101 va se connecter à des sites ayant différentes adresses. Si au cours de cette navigation il appuie sur la touche 122, l'adresse du site auquel il est connecté sera alors stockée dans le dictionnaire 104. C'est l'étape 213 de mise à jour du dictionnaire. Dans l'étape 213 le microprocesseur va lire l'adresse validée ou l'adresse à laquelle est connecté l'appareil 101, et la placer dans la colonne 104p en tant que nouvelle entrée du dictionnaire 104. Puis il va traduire cette adresse au format qu'elle aurait si elle avait été saisie en n'appuyant qu'une seule fois sur une touche par lettre de l'adresse. C'est à dire qu'il met à jour la colonne 104e en fonction de cette nouvelle entrée du dictionnaire.

La figure 2 montre une étape 214 de saisie d'une adresse. Dans cette étape l'appareil 101 est en mode de saisie alphabétique. L'utilisateur peut alors saisir une adresse de site complète puis appuyer sur la touche 122 pour mettre à jour le dictionnaire comme décrit à l'étape 213. L'utilisateur peut aussi, à partir de l'étape 214 appuyer sur la touche 121 pour connecter l'appareil 101 à cette adresse.

La figure 2 montre aussi une étape 215 de connexion automatique au serveur d'adresse. Dans cette étape le microprocesseur 102 commandé par les codes instructions contenus dans la zone 103M va paramétrer le modem 127 pour que celui-ci se connecte au serveur 131. Une fois cette connexion établie, le microprocesseur 102 va rapatrier le contenu de la table 132 du serveur 131. Cette table contient au moins une liste d'adresses susceptible d'être écrite dans la colonne 104p. La table 132 peut aussi contenir une colonne stockant la traduction des adresses de sa colonne 132P. Cette colonne 132E peut alors elle aussi être transmise. Cependant il est plus intéressant en terme de temps de connexion que la traduction des adresses contenues dans la colonne 132P soit effectuée par le microprocesseur 102. En effet la connexion au serveur 131 s'effectue en général de nuit à l'heure où les connexions locales ne sont pas chères, et où l'utilisateur de l'appareil 101 n'a pas besoin de cet appareil. Les ressources du microprocesseur 102 peuvent alors être employées pour effectuer la traduction de la liste d'adresses de la colonne 132P. La fréquence de connexion de l'appareil 101 au serveur 131 est paramétrée dans une zone de la mémoire 103. Dans la pratique elle peut être de l'ordre du mois.

La table 104 contient plusieurs zones. Une première zone d'environ 500 adresses est enregistrée au moment de la mise en vente de l'appareil 101. C'est cette première zone qui est mise à jour lors de la connexion au serveur 131. La table 104 contient une autre zone qui est mise à jour par l'utilisateur soit directement en passant par l'étape 214 soit au fur et à mesure de sa navigation comme on l'a vu pour l'étape 212.

Dans les deux cas l'utilisateur de l'appareil 101 peut visualiser, modifier, ou supprimer les entrées de la table 104.

## Revendications

1. Procédé d'appariement d'un motif saisi et d'une phrase enregistrée dans un dictionnaire comportant plusieurs phrases dans lequel :
- on saisit (206) le motif à partir d'un clavier (106) comportant un nombre réduit de touches alphabétiques, ce nombre étant inférieur au nombre de caractères que l'on peut employer dans une phrase du dictionnaire, chaque touche correspondant à plusieurs caractères,
- on appuie une seule fois, de manière ponctuelle, sur une touche pour accéder à un caractère correspondant à cette touche,
- on recherche (207) les phrases du dictionnaire qui comportent au moins une occurrence du motif saisi.
- on enregistre (208) les résultats de la recherche dans une mémoire,
**caractérisé en ce que**
- on recherche (207) au moins une occurrence du motif au-delà d'un premier caractère d'une phrase.

2. Procédé selon la revendication 1, **caractérisé en ce qu'**on affiche (209) sur un écran (125) des symboles correspondant aux touches enfoncées au cours de la saisie.

3. Procédé selon l'une des revendications 1 ou 2, **caractérisé en ce qu'**on dispose de dix symboles, un par touche, pour la saisie du motif, chaque symbole équivalant à plusieurs caractères.

4. Procédé selon l'une des revendications 1 à 3, **caractérisé en ce que** :
- on enregistre (104) pour chaque phrase du dictionnaire, l'équivalent de cette phrase selon un mode symbolique, chaque caractère d'une phrase correspondant alors à un symbole d'une touche,
- on effectue l'appariement entre le motif tel que saisi et les équivalents des phrases du dictionnaire.

5. Procédé selon l'une des revendications 1 à 4, **caractérisé en ce qu'**on enregistre dans une mémoire (103) une liste d'identifiants de phrases du dictionnaire résultant de la recherche.

6. Procédé selon l'une des revendications 1 à 5, **caractérisé en ce que** :
- on affiche (209) les résultats de la recherche sur un écran, phrase par phrase,
- on passe (209) d'une phrase du résultat de la recherche à une autre en appuyant sur une touche.

7. Procédé selon l'une des revendications 1 à 6, **caractérisé en ce qu'**on pré-enregistre des phrases dans le dictionnaire au moment de la fabrication d'un appareil utilisant le procédé.

8. Procédé selon la revendication 7, **caractérisé en ce que** le nombre de phrases pré-enregistrées avoisine les cinq cents.

9. Procédé selon l'une des revendications 1 à 8, **caractérisé en ce qu'**on met à jour (213, 215) le contenu du dictionnaire via une connexion distante à un serveur (131).

10. Procédé selon l'une des revendications 1 à 9, **caractérisé en ce qu'**on met à jour (213, 214) le contenu du dictionnaire à partir d'une phrase saisie sur le clavier alors dans un mode alphabétique permettant cette saisie.

11. Procédé selon l'une des revendications 1 à 10, **caractérisé en ce que** les phrases du dictionnaire sont des adresses Internet.

12. Procédé selon la revendication 11, **caractérisé en ce que** :
- on utilise le clavier pour naviguer sur Internet,
- on met à jour le contenu du dictionnaire par l'appui sur une touche du clavier au cours de cette navigation.

13. Procédé selon l'une des revendications 1 à 12, **caractérisé en ce qu'**on modifie (201) le mode de saisie du clavier en appuyant sur une touche du clavier, les modes possibles étant le mode alphabétique, le mode T9 et le mode symbolique.

14. Procédé selon l'une des revendications 1 à 13, **caractérisé en ce que** le motif a une longueur de trois symboles.

15. Procédé selon l'une des revendications 1 à 14, **caractérisé en ce que** la mise à jour du dictionnaire est effectuée périodiquement et automatiquement par une connexion à un serveur.

16. Procédé selon l'une des revendications 1 à 15, **caractérisé en ce qu'** on modifie (210) une phrase résultant de la recherche.

17. Procédé selon l'une des revendications 1 à 16, **caractérisé en ce que** :
- on n'effectue la recherche qu'au fur et à mesure de la saisie du motif,
- on affiche les résultats de la recherche au fur et à mesure de la saisie,
- on relance la recherche à chaque nouveau symbole saisi pour le motif.

18. Procédé selon l'une des revendications 1 à 17, **caractérisé en ce que** :
- on valide le motif par un appui sur une touche prédéfinie,
- on utilise le motif validé pour effectuer la recherche dans le dictionnaire.

## Patentansprüche

1. Verfahren zum Verknüpfen eines Musters und eines Satzes in einem Wörterbuch mit mehreren Sätzen, bei dem das Muster über eine Tastatur (106) mit einer begrenzten Anzahl von alphabetischen Tasten eingegeben (206) wird, wobei die Anzahl kleiner als die Anzahl von Zeichen ist, die in einem Satz des Wörterbuchs verwendet werden können, wobei jede Taste mehreren Zeichen entspricht,
punktuell einmal auf eine Taste gedrückt wird, um ein Zeichen aufzurufen, das dieser Taste entspricht,
diejenigen Sätze in dem Wörterbuch gesucht werden (207), die das eingegebene Muster wenigstens einmal aufweisen,
die Ergebnisse in einem Speicher abgespeichert (208) werden,
**dadurch gekennzeichnet, dass**
wenigstens ein Auftreten des Musters außerhalb eines ersten Zeichens eines Satzes gesucht (207) wird.

2. Verfahren nach Anspruch 1,
**dadurch gekennzeichnet, dass**
auf einem Schirm (125) Symbole angezeigt werden (209), die den Tasten entsprechen, welche beim Eingeben betätigt werden.

3. Verfahren nach Anspruch 1 oder 2,
**dadurch gekennzeichnet, dass**
zehn Symbole, jeweils eins pro Taste, für die Eingabe des Musters bereitgestellt sind, wobei jedes Symbol mehreren Zeichen äquivalent ist.

4. Verfahren nach einem der Ansprüche 1 bis 3,
**dadurch gekennzeichnet, dass**
für jeden Satz des Wörterbuchs das Äquivalent dieses Satzes symbolisch abgespeichert wird (104), wobei jedes Zeichen eines Satzes damit einem Tastensymbol entspricht,
das Muster wie eingegeben mit den Äquivalenten der Sätze des Wörterbuchs verglichen wird.

5. Verfahren nach einem der Ansprüche 1 bis 4,
**dadurch gekennzeichnet, dass**
in einem Speicher (103) eine Liste mit Identifizierungen der Sätze des Wörterbuchs, die bei der Suche gefunden wurden, abgespeichert wird.

6. Verfahren nach einem der Ansprüche 1 bis 5,
**dadurch gekennzeichnet, dass**
die Ergebnisse der Suche Satz für Satz auf einem Schirm angezeigt werden (209),
von einem Satz aus dem Ergebnis der Suche zu einem anderen gewechselt wird (209), indem eine Taste gedrückt wird.

7. Verfahren nach einem der Ansprüche 1 bis 6,
**dadurch gekennzeichnet, dass**
bei der Herstellung einer Vorrichtung für das Verfahren Sätze in dem Wörterbuch vorher abgespeichert werden.

8. Verfahren nach Anspruch 7,
**dadurch gekennzeichnet, dass**
die Anzahl der vorher abgespeicherten Sätze gegen fünfhundert geht.

9. Verfahren nach einem der Ansprüche 1 bis 8,
**dadurch gekennzeichnet, dass**
der Inhalt des Wörterbuchs über eine Fernverbindung zu einem Server (131) aktualisiert wird (213, 215).

10. Verfahren nach einem der Ansprüche 1 bis 9,
**dadurch gekennzeichnet, dass**
der Inhalt des Wörterbuchs durch einen Satz, der auf der Tastatur eingegeben wurde, die diese alphabetische Eingabe zulässt, aktualisiert wird (213, 215).

11. Verfahren nach einem der Ansprüche 1 bis 10,
**dadurch gekennzeichnet, dass**
die Sätze des Wörterbuchs Internet-Adressen sind.

12. Verfahren nach Anspruch 11,
**dadurch gekennzeichnet, dass**
die Tastatur zum Navigieren im Internet dient,
der Inhalt des Wörterbuchs aktualisiert wird, indem bei diesem Navigieren eine Taste der Tastatur gedrückt wird.

13. Verfahren nach einem der Ansprüche 1 bis 12,
**dadurch gekennzeichnet, dass**
die Art der Eingabe modifiziert wird (201), indem eine Taste der Tastatur gedrückt wird, wobei dies alphabetisch, mit T9 und mit Symbolen möglich ist.

14. Verfahren nach einem der Ansprüche 1 bis 13,
**dadurch gekennzeichnet, dass**
das Muster eine Länge von drei Symbolen hat.

15. Verfahren nach einem der Ansprüche 1 bis 14,
**dadurch gekennzeichnet, dass**
das Aktualisieren des Wörterbuchs periodisch und automatisch in Verbindung mit einem Server erfolgt.

16. Verfahren nach einem der Ansprüche 1 bis 15,
**dadurch gekennzeichnet, dass**
ein Satz als Ergebnis der Suche modifiziert wird (210).

17. Verfahren nach einem der Ansprüche 1 bis 16,
**dadurch gekennzeichnet, dass**
die Suche je nach Eingabe des Musters durchgeführt wird,
die Ergebnisse der Suche je nach Eingabe angezeigt werden,
die Suche bei jedem neuen, für das Muster eingegebenen Symbol wieder aufgenommen wird.

18. Verfahren nach einem der Ansprüche 1 bis 17,
**dadurch gekennzeichnet, dass**
das Muster durch Drücken einer vorher festgelegten Taste validiert wird,
das validierte Muster verwendet wird, um die Suche in dem Wörterbuch durchzuführen.

## Claims

1. Process for matching an inputted pattern with a phrase stored in a dictionary containing a plurality of phrases in which:
- the pattern is inputted (206) from a keyboard (106) including a reduced number of alphabetic keys, this number being smaller than the number of characters which can be used in a phrase in the dictionary, each key corresponding to a plurality of characters,
- a key is pressed only once, in punctual manner, to access a character corresponding to this key,
- a search is made (207) for the phrases in the dictionary which include at least one occurrence of the inputted pattern,
- the search results are stored (208) in a memory,
***characterised by** the fact that*
- a search is made (207) for at least one occurrence of the pattern beyond a first character of a phrase.

2. Process as described in claim 1, ***characterised by*** the *fact that* symbols corresponding to the keys pressed during the input are displayed (209) on a screen (125).

3. Process as described in one of claims 1 or 2, ***characterised by** the fact that* ten symbols, one per key, are available for inputting the pattern, each symbol equivalent to a plurality of characters.

4. Process as described in one of claims 1 to 3,
***characterised by** the fact that:*
- for each phrase in the dictionary, the equivalent of this phrase is stored (104) in a symbol mode, each character of a phrase then corresponding to a symbol of a key,
- matching is performed between the pattern as inputted and the equivalents of the phrases in the dictionary.

5. Process as described in one of claims 1 to 4,
***characterised by** the fact that* a list of identifiers of phrases in the dictionary resulting from the search is stored in a memory (103).

6. Process as described in one of claims 1 to 5,
***characterised by** the fact that:*
- the results of the search are displayed (209) on a screen, phrase by phrase,
- a key is pressed to pass (209) from one phrase of the search results to another.

7. Process as described in one of claims 1 to 6, ***characterised by** the fact that* phrases are pre-stored in the dictionary at the time of manufacture of an apparatus using the process.

8. Process as described in claim 7, ***characterised by** the fact that* the number of pre-stored phrases is close to five hundred.

9. Process as described in one of claims 1 to 8, ***characterised by** the fact that* the content of the dictionary is updated (213, 215) via a remote connection to a server (131).

10. Process as described in one of claims 1 to 9, ***characterised by** the fact that* the content of the dictionary is updated (213, 214) from a phrase inputted on the keyboard while in an alphabetic mode allowing this input.

11. Process as described in one of claims 1 to 10, ***characterised by** the fact that* the phrases in the dictionary are Internet addresses.

12. Process as described in claim 11, ***characterised by** the fact that:*
- the keyboard is used to navigate on the Internet,
- the content of the dictionary is updated by pressing a key on the keyboard during this navigation.

13. Process as described in one of claims 1 to 12, ***characterised by** the fact that* the keyboard input mode is modified (201) by pressing a key on the keyboard, the possible modes being alphabetic mode, T9 mode and symbol mode.

14. Process as described in one of claims 1 to 13, ***characterised by** the fact that* the pattern has a length of three symbols.

15. Process as described in one of claims 1 to 14, ***characterised by** the fact that* updating of the dictionary is performed periodically and automatically through a connection to a server.

16. Process as described in one of claims 1 to 15, ***characterised by** the fact that* a phrase resulting from the search is modified (210).

17. Process as described in one of claims 1 to 16,
***characterised by** the fact that:*
- the search is only performed progressively as the pattern is inputted,
- the search results are displayed progressively with the input,
- the search is restarted at each new symbol inputted for the pattern.

18. Process as described in one of claims 1 to 17,
***characterised by** the fact that:*
- the pattern is validated by pressing a pre-defined key,
- the validated pattern is used to perform the search in the dictionary.
